(19) Europäisches Patentamt
European Patent Office
Office européen des brevets

(11) **EP 2 919 191 B1**

(12) **EUROPEAN PATENT SPECIFICATION**

(45) Date of publication and mention
of the grant of the patent:
**31.05.2023 Bulletin 2023/22**

(21) Application number: **15157682.4**

(22) Date of filing: **05.03.2015**

(51) International Patent Classification (IPC):
**H04N 13/00** (2018.01)  **H04N 13/128** (2018.01)
**G06T 7/593** (2017.01)  **H04N 13/239** (2018.01)
**H04N 13/271** (2018.01)

(52) Cooperative Patent Classification (CPC):
**G06T 7/593; H04N 13/128; H04N 13/239;
H04N 13/271;** G06T 2207/10012;
G06T 2207/30252; G06V 10/759; H04N 2013/0081;
H04N 2013/0092

(54) **Disparity value deriving device, equipment control system, movable apparatus, robot, and disparity value producing method**

DISPARITÄTSWERTABLEITUNGSVORRICHTUNG, AUSRÜSTUNGSSTEUERUNGSSYSTEM, BEWEGLICHE VORRICHTUNG, ROBOTER UND DISPARITÄTSWERTERZEUGUNGSVERFAHREN

DISPOSITIF DE DÉRIVATION D'UNE VALEUR DE DISPARITÉ, SYSTÈME DE COMMANDE D'ÉQUIPEMENT, APPAREIL MOBILE, ROBOT ET PROCÉDÉ DE PRODUCTION DE VALEUR DE DISPARITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2014 JP 2014048180
22.01.2015 JP 2015010387**

(43) Date of publication of application:
**16.09.2015 Bulletin 2015/38**

(73) Proprietor: **Ricoh Company, Ltd.
Tokyo 143-8555 (JP)**

(72) Inventors:
• **Watanabe, Yoshikazu
Tokyo, 143-8555 (JP)**
• **Yokota, Soichiro
Tokyo, 143-8555 (JP)**
• **Saitoh, Kiichiroh
Tokyo, 143-8555 (JP)**
• **Zhong, Wei
Tokyo, 143-8555 (JP)**
• **Tamura, Ryohsuke
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**JP-A- 2012 181 142**

• **Christian N Scharfenberger: "Panoramic Vision for Automotive Applications: From Image Rectification to Ambiance Monitoring and Driver Body Height Estimation", , 3 February 2011 (2011-02-03), XP055143078, Retrieved from the Internet: URL:http://mediatum.ub.tum.de/doc/1002339/1002339.pdf [retrieved on 2014-09-26]**
• **STEFAN K GEHRIG ET AL: "Improving Stereo Sub-Pixel Accuracy for Long Range Stereo", ICCV 2007. IEEE 11TH INTERNATIONAL CONFERENCE ON COMPUTER VISION, 2007, IEEE, 1 October 2007 (2007-10-01), pages 1-7, XP031194701, ISBN: 978-1-4244-1630-1**
• **HEIKO HIRSCHMULLER: "Accurate and Efficient Stereo Processing by Semi-Global Matching and Mutual Information", IEEE CONFERENCE ON COMPUTER VISION AND PATTERN RECOGNITION, 2005,**

**Description**

FIELD OF THE INVENTION

The present invention relates to a disparity value deriving device, an equipment control system, a movable apparatus, a robot, and a disparity value producing method.

BACKGROUND OF THE INVENTION

A distance measurement method is conventionally known in which disparity for an object is derived from a stereo camera by stereo imaging, and using a disparity value representing the disparity, the distance from the stereo camera to the object is measured based on the principle of triangulation. With this distance measurement method, for example, the distance between automobiles or the distance between an automobile and an obstacle is measured and utilized for preventing a collision involving an automobile.

A stereo matching process is used as a method of obtaining a disparity value. In the stereo matching process, a disparity value between a reference image obtained with one of two cameras of a stereo camera and a comparison image obtained with the other camera is detected by obtaining the position of a corresponding pixel that is a pixel having the most similar image signal, while successively shifting a plurality of candidates for the corresponding pixel in the comparison image relative to a reference pixel of interest in the reference image. In general, the luminance values of image signals obtained with two cameras are compared with each other, and the position of a pixel having the lowest cost (here, "dissimilarity") of the compared luminance values is obtained. The known examples of the stereo matching process include a block matching method (for example, Japanese Patent Application Laid-open No.2006-090896).

The block matching method, however, does not provide a sufficient disparity value in a region where texture indicating the amount of change in luminance of an object is weak and features to be extracted are scarce.

Heiko Hirschmuller, "Accurate and Efficient Stereo Processing by Semi-Global Matching and Mutual Information", IEEE Conference on Computer Vision and Pattern Recognition (2005) illustrates the semi-global matching (SGM) method, which enables disparity detection by aggregating costs for the neighboring regions, even for a region (coordinates) where texture is weak so that a sufficient cost (dissimilarity) between two images cannot be obtained with the region alone. Aggregation of costs, however, causes a distance measurement error in a boundary portion between objects with widely different textures, and the result of distance measurement expands or shrinks from the actual size of the object. Such expansion poses a problem in some applications to which the result of distance measurement is applied. For example, in such a case where the distance to a vehicle ahead is measured with a vehicle-mounted stereo camera for the purpose of automatic avoidance, a vehicle larger than the actual size of the vehicle is recognized, leading to unnecessary avoidance control.

In order to cope with the problem above, Japanese Patent Application Laid-open No.2012-181142 proposes a method in which after an aggregation process (a process of obtaining the cumulative sum of costs) is performed once, the priority of each direction is obtained by scanning the costs again, and the obtained costs are corrected based on the priority.

However, it has been impossible to accurately measure the distance of a boundary portion between objects with widely different textures while suppressing the load of distance measurement processing and the memory usage of distance measurement processing.

Therefore, there is a need to provide a disparity value deriving device, an equipment control system, a movable apparatus, a robot, and a disparity value producing method that enable accurate measurement of the distance of a boundary portion between objects with widely different textures while suppressing the load of distance measurement processing and the memory usage of distance measurement processing.

Christian N Scharfenberger: "Panoramic Vision for Automotive Applications: From Image Rectification to Ambiance Monitoring and Driver Body Height Estimation", 3 February 2011 (2011-02-03) pertains to a stereo algorithm to use dens disparity maps from low-textured and low-resolution panoramic images.

The present invention is defined by the subject-matter of the appended claims. It is an object of the present invention to at least partially solve the problems in the conventional technology.

The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is an illustration of the principle of deriving the distance from an imaging device to an object;
FIG. 2 illustrates (a) an example of a reference image, (b) an example of a high density disparity image, and (c) an example of an edge disparity image;
FIG. 3 illustrates a calculation of a shift amount while successively shifting candidates for a corresponding pixel in a comparison image relative to a reference image;
FIG. 4 is a graph illustrating costs with respect to shift amounts;
FIG. 5 is a conceptual diagram for deriving a synthesized cost;
FIG. 6 is a graph illustrating synthesized costs with respect to disparity values;
FIG. 7 illustrates an automobile equipped with a disparity value deriving device according to an embodiment of the present invention;
FIG. 8 is a schematic diagram of the object recognition system;
FIG. 9 is an overall hardware configuration diagram of the object recognition system;
FIG. 10 is a diagram illustrating an example of pixels in the vicinity of a boundary between regions with widely different textures;
FIG. 11 illustrates examples of the costs and the path costs for a pixel in FIG. 10;
FIG. 12 illustrates examples of the costs and the path costs for a pixel in FIG. 10;
FIG. 13 illustrates examples of the costs and the path costs for a pixel in FIG. 10;
FIG. 14 is a functional block diagram of the principal part of a disparity value deriving device in an embodiment;
FIG. 15 illustrates (a) an example of a reference image, and (b) an example of edge information indicating edges in the reference image in (a);
FIG. 16 is a flowchart illustrating a disparity value producing method in an embodiment;
FIG. 17 illustrates examples of a disparity image obtained by the disparity value deriving device in the embodiment and an example of a disparity image obtained by the conventional SGM method;
FIG. 18 is a diagram illustrating an example of pixel information in a fourth modification of the embodiment; and
FIG. 19 illustrates an example of an equipment control system in the present embodiment mounted on a vehicle.

DETAILED DESCRIPTION OF THE PREFERRED EMBODIMENTS

Embodiments of the present invention will be described below with reference to the accompanying drawings.

Overview of Distance Measurement Method Using SGM Method

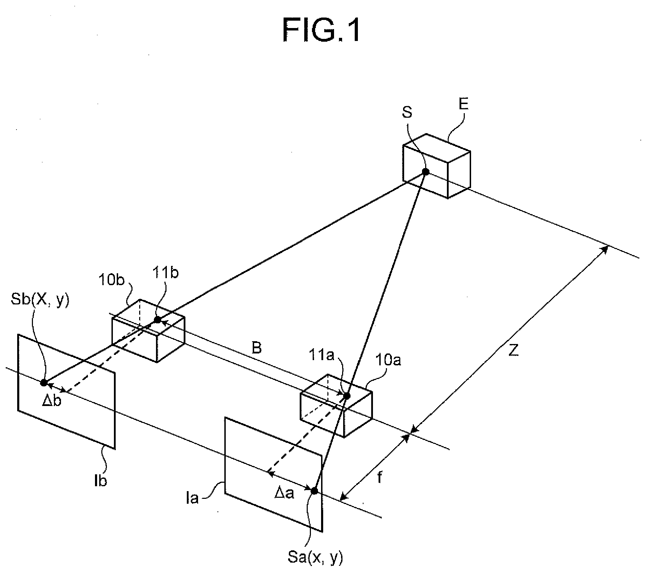

Referring first to FIG. 1 to FIG. 6, an overview of a distance measurement method using the semi-global matching (SGM) method will be described. The SGM method is disclosed in Accurate and Efficient Stereo Processing by Semi-Global Matching and Mutual Information) and a brief explanation is given below.

Principle of Distance Measurement

Referring to FIG. 1, the principle of measuring the distance from a stereo camera to an object will be described, in which disparity of the object is derived as a disparity value by conducting stereo imaging using the stereo camera, and the disparity value is used to measure the distance from the stereo camera to the object. FIG. 1 is an illustration of the principle of deriving the distance from imaging devices to an object. The following description explains processes with respect to each single pixel rather than with respect to each predetermined region including a plurality of pixels, to make the explanation simpler. When the process is performed not in units of single pixels but in units of predetermined regions each including a plurality of pixels, the predetermined region that includes a reference pixel is denoted as a reference region, and the predetermined region that includes a corresponding pixel is denoted as a corresponding region. The reference region may include a reference pixel alone and the corresponding region may include a corresponding pixel alone.

Disparity Value Calculation

The images captured by an imaging device 10a and an imaging device 10b illustrated in FIG. 1 are denoted as a reference image Ia and a comparison image Ib, respectively. In FIG. 1, the imaging device 10a and the imaging device 10b are installed parallel and at the same height. In FIG. 1, a point S on an object E in a three-dimensional space is captured at one position of the imaging device 10a and also at one position of the imaging device 10b, wherein these two positions are on the same horizontal line of the imaging device 10a and the imaging device 10b. That is, the point S in each image is captured at a point Sa(x,y) in the reference image Ia and a point Sb(x,y) in the comparison image Ib. Here, the disparity value $\Delta$ is expressed as Equation (1) using Sa(x,y) in the coordinates of the imaging device 10a and Sb(X,y) in the coordinates of the imaging device 10b.

$$\Delta = X - x \qquad (1)$$

Here, as in the case of FIG. 1, the disparity value is written as $\Delta = \Delta a + \Delta b$, where $\Delta a$ is the distance between the point Sa(x,y) in the reference image Ia and the point of intersection of the normal extending from the imaging lens 11a to the imaging surface, and $\Delta b$ is the distance between the point Sb(X,y) in the comparison image Ib and the point of intersection of the normal extending from the imaging lens 1 1b to the imaging surface.

Distance Calculation

The distance Z from the imaging devices 10a, 10b to the object E can be derived using the disparity value $\Delta$. Specifically, the distance Z is the distance from the plane including the focus position of the imaging lens 11a and the focus position of the imaging lens 11b to a particular point S on the object E. As illustrated in FIG. 1, the distance Z can be calculated by Equation (2) using the focal length f of the imaging lens 11a and the imaging lens 11b, the base line length B that is the length between the imaging lens 11a and the imaging lens 11b, and the disparity value $\Delta$.

$$Z = (B \times f)/\Delta \qquad (2)$$

From Equation (2), the greater the disparity value $\Delta$ is, the smaller the distance Z is, and the smaller the disparity value $\Delta$ is, the greater the distance Z is.

SGM Method

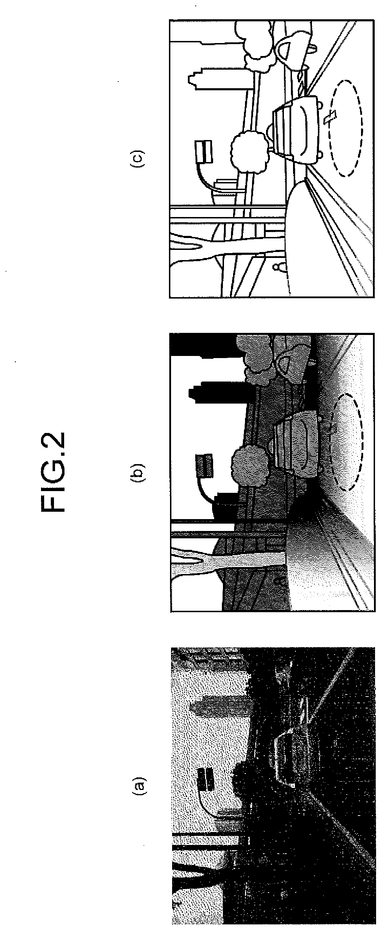

Referring now to FIG. 2 to FIG. 6, a distance measurement method using the SGM method will be described. FIG. 2(a) is a conceptual diagram illustrating a reference image, FIG. 2(b) is a conceptual diagram illustrating a high density disparity image for FIG. 2(a), and FIG. 2(c) is a conceptual diagram illustrating an edge disparity image for FIG. 2(a). Here, the reference image is an image representing an object by luminance. The high density disparity image is an image that is derived from the reference image by the SGM method and represents the disparity value at each set of coordinates in the reference image. The edge disparity image is an image that is derived by the conventionally used block matching method and represents the disparity values only at a part with relatively strong texture such as an edge in the reference image.
The SGM method is a method of deriving the disparity values appropriately even for an object with weak texture and deriving the high density disparity image illustrated in FIG. 2(b) based on the reference image illustrated in FIG. 2(a). When the block matching method is used, the edge disparity image illustrated in FIG. 2(c) is derived based on the reference image illustrated in FIG. 2(a). As can be understood by comparing the ovals enclosed by the broken lines in FIG. 2(b) and FIG. 2(c), compared with the edge disparity image, the high density disparity image can represent detailed information such as a road with weak texture and therefore enables distance measurement in more detail.
In the SGM method, a disparity value is derived by calculating a cost and thereafter further calculating a synthesized cost that is synthesized dissimilarity, rather than deriving a disparity value immediately after calculating a cost that is dissimilarity. In this method, a disparity image (here, high density disparity image) representing disparity values in almost all the pixels is finally derived. The block matching method is the same as the SGM method in that a cost is calculated. However, unlike the SGM method, the disparity values only at a part with relatively strong texture such as an edge are derived without synthesized costs being calculated.

Calculation of Cost

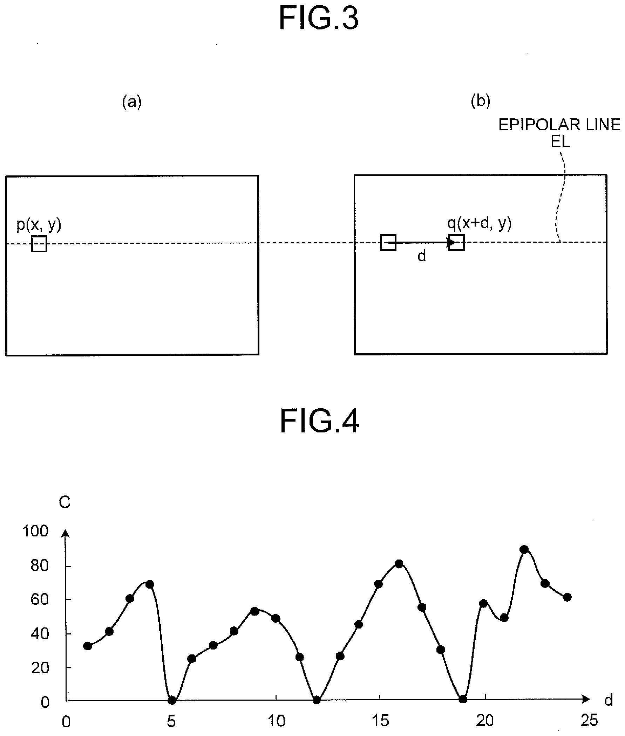

Referring first to FIG. 3 and FIG. 4, a method of calculating a cost C(p,d) will be described. In FIG. 3, (a) is a conceptual diagram illustrating a reference pixel in a reference image and (b) is a conceptual diagram of calculating costs while successively shifting (displacing) candidates for the corresponding pixel in a comparison image relative to the reference pixel in (a). FIG. 4 is a graph illustrating costs with respect to shift amounts. Here, the corresponding pixel is a pixel in the comparison image that is the most similar to the reference pixel in the reference image. In the following description, it is assumed that C(p,d) represents C(x,y,d).

As illustrated in (a) in FIG. 3, the cost C(p,d) of each candidate corresponding pixel q(x+d,y) that corresponds to the reference pixel p(x,y) is calculated based on the luminance values of a predetermined reference pixel p(x,y) in the reference image and of a plurality of candidate corresponding pixels q(x+d,y) on the epipolar line EL in the comparison image that corresponds to the reference pixel p(x,y). The variable d is a shift amount (displacement amount) of each candidate q for the corresponding pixel from the reference pixel p, and a shift amount is expressed in units of pixels in the present embodiments. That is, in FIG. 3, the cost C(p,d) that is dissimilarity in luminance value between a candidate corresponding pixel q(x+d,y) and the reference pixel p(x,y) is calculated while successively shifting the candidate corresponding pixels q(x+d,y) one pixel by one pixel in a predetermined range (for example, $0 < d < 25$). A known method such as SAD (Sum of Absolute Difference) is applied as the method of calculating the cost C where the cost C denotes dissimilarity.

As illustrated in FIG. 4, the cost C(p,d) thus calculated can be expressed by a graph of a cost curve that is a set of the costs C with respect to shift amounts d. In FIG. 4, since the cost C is zero when the shift amount d = 5, 12, 19, the minimum value cannot be obtained. In the case of an object with weak texture, it is thus difficult to obtain the minimum value of the cost C.

Calculation of Synthesized Cost

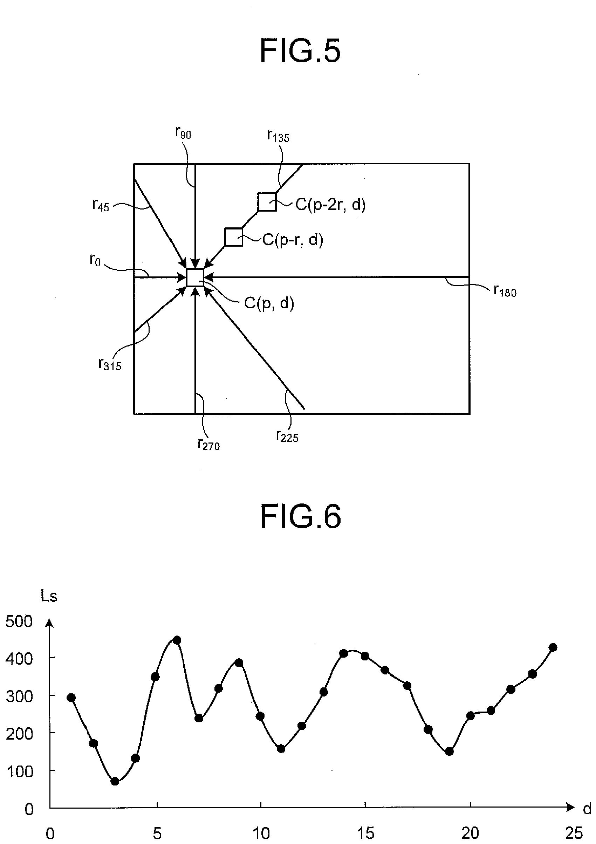

Referring now to FIG. 5 and FIG. 6, the method of calculating a synthesized cost Ls(p,d) will be described. FIG. 5 is a conceptual diagram for deriving a synthesized cost. FIG. 6 is a graph of a synthesized-cost curve illustrating synthesized costs with respect to disparity values.

In the method of calculating a synthesized cost in the present embodiments, the cost C(p,d) in the reference pixel p(x,y) is calculated, and costs for each one of pixels $p(x_n,y_n)$ existing near to far positions from the reference pixel p(x,y) is also calculated as costs C for each one of another reference pixels $p(x_n,y_n)$. With this configuration, the synthesized cost Ls(p,d) for the reference pixel p(x,y) is calculated by aggregating the calculated cost C(p,d) for the reference pixel p(x,y) and the calculated costs C for other reference pixels $p(x_n,y_n)$ existing near to far positions from the reference pixel p(x,y). Similarly, the synthesized cost Ls for each one of reference pixels $p(x_n,y_n)$ is calculated by aggregating the calculated cost C for one reference pixel $p(x_n,y_n)$ and the calculated costs C for other reference pixels existing near to far positions from the reference pixel $p(x_n,y_n)$.

The method of calculating a synthesized cost will now be described in more detail. In order to calculate the synthesized cost Ls(p,d), first, it is necessary to calculate a path cost Lr(p,d). Equation (3) is an equation for calculating the path cost Lr(p,d), and Equation (4) is an equation for calculating the synthesized cost Ls.

$$Lr(p,d) = C(p,d) + \min\{(Lr(p-r,d),\ Lr(p-r,d-1)+P1,\ Lr(p-r,d+1) + P1,\ Lrmin(p-r) + p2\} \quad (3)$$

Here, in Equation (3), r denotes a direction vector in the aggregation direction and has two components of the x direction and the y direction. The term min{ } is a function for obtaining the minimum value. Lrmin(p-r) denotes the minimum value of Lr(p-r,d) when the shift amount d is changed in the coordinates in which p is shifted by one pixel in r direction. The path cost Lr is recurrently applied as expressed in Equation (3). P1 and P2 are fixed parameters set by experiment in advance such that the disparity values $\Delta$ of adjacent reference pixels on the path are likely to be continuous. For example, P1 = 48, P2 = 96. As expressed in Equation (3), the path cost Lr(p,d) is obtained by adding the minimum value of the path cost Lr of each pixel in the pixels in r direction illustrated in FIG. 5 to the cost C in the reference pixel p(x,y). As described above, in order to obtain Lr at each pixel in r direction, Lr is obtained first from the endmost pixel in r direction of the reference pixel p(x,y), and Lr is obtained along r direction. As illustrated in FIG. 5, $Lr_0$, $Lr_{45}$, $Lr_{90}$, $Lr_{135}$, $Lr_{180}$, $Lr_{225}$, $Lr_{270}$, $Lr_{315}$ in eight directions are obtained, and the synthesized cost Ls is eventually obtained based on Equation (4).

$$Ls(p,d)\ =\ \sum_8 Lr \quad (4)$$

The synthesized cost Ls(p,d) thus calculated can be represented by a graph of a synthesized-cost curve representing the synthesized cost Ls(p,d) with respect to the shift amount d, as illustrated in FIG. 6. In FIG. 6, the synthesized cost Ls has the minimum value when the shift amount d = 3 and therefore is calculated as the disparity value $\Delta$ = 3. Although the number of r is eight in the foregoing description, the number is not limited thereto. For example, the eight directions may be further divided by two into 16 directions or by three into 24 directions. Although being expressed as "dissimilarity", the cost C may be expressed as "similarity" that is a reciprocal of dissimilarity. In this case, a known method such as NCC (Normalized Cross Correlation) is applied as the method of calculating the cost C. In this case, the disparity value $\Delta$ not with the minimum but with the "maximum" synthesized cost Ls is derived. The similarity and the dissimilarity may be inclusively denoted as "matching degree".

Specific Description of Present Embodiments

Specific descriptions of the present embodiments are given below with reference to the drawings. Here, an object recognition system 1 mounted on an automobile will be described. The object recognition system 1 may be mountable not only on an automobile as an example of a vehicle but also on a motor bicycle, a bicycle, a wheelchair, and an agricultural cultivator as other examples of a vehicle. The object recognition system 1 may be mountable not only on a vehicle as an example of a movable apparatus but also on a robot as another example of a movable apparatus. The robot may not be a movable apparatus but may be an apparatus such as an industrial robot fixedly installed in FA (Factory Automation). The apparatus fixedly installed may not be a robot but may be a security monitoring camera.

Configuration of Embodiment

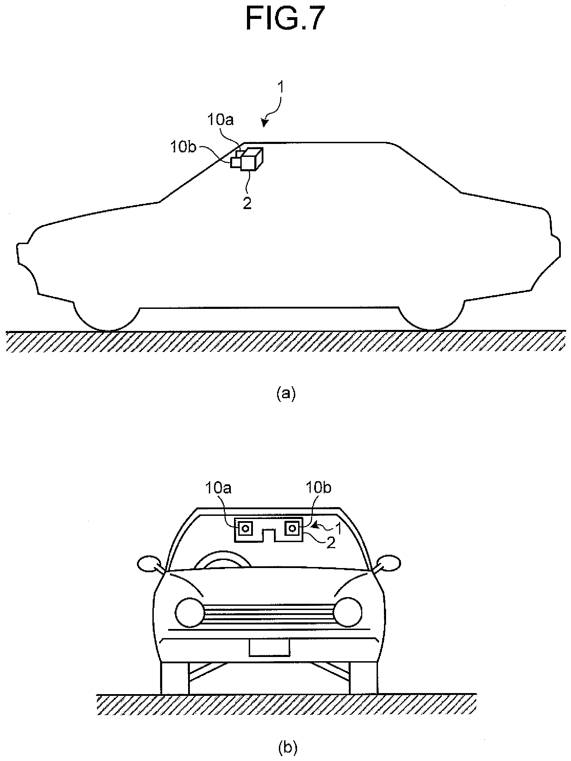

First, the overall configuration of each of the present embodiments will be described with reference to FIG. 7 to FIG. 9.

External Configuration

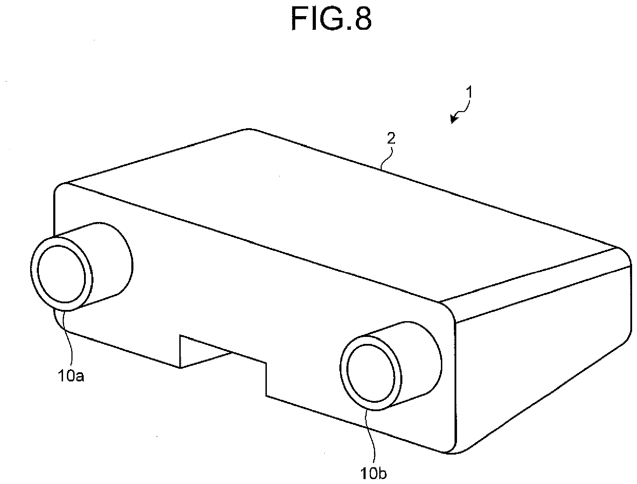

With reference to FIG. 7 and FIG. 8, an external configuration of the object recognition system 1 in the present embodiments will be described. FIG. 7(a) is a schematic diagram depicting a side of an automobile equipped with the object recognition system according to an embodiment of the present invention and FIG. 7(b) is a schematic diagram depicting the front of the automobile. FIG. 8 is a schematic diagram of the object recognition system.

As illustrated in FIG. 7(a) and 7(b), the object recognition system 1 in the present embodiments includes an imaging device 10a (first imaging unit) and an imaging device 10b (second imaging unit). The imaging device 10a and the imaging device 10b are installed (first imaging position, second imaging position) so as to be able to image the scene ahead in the direction in which the automobile travels. As illustrated in FIG. 8, the object recognition system 1 includes a main body 2 and a pair of cylindrical imaging device 10a and imaging device 10b provided on the main body 2.

Overall Hardware Configuration

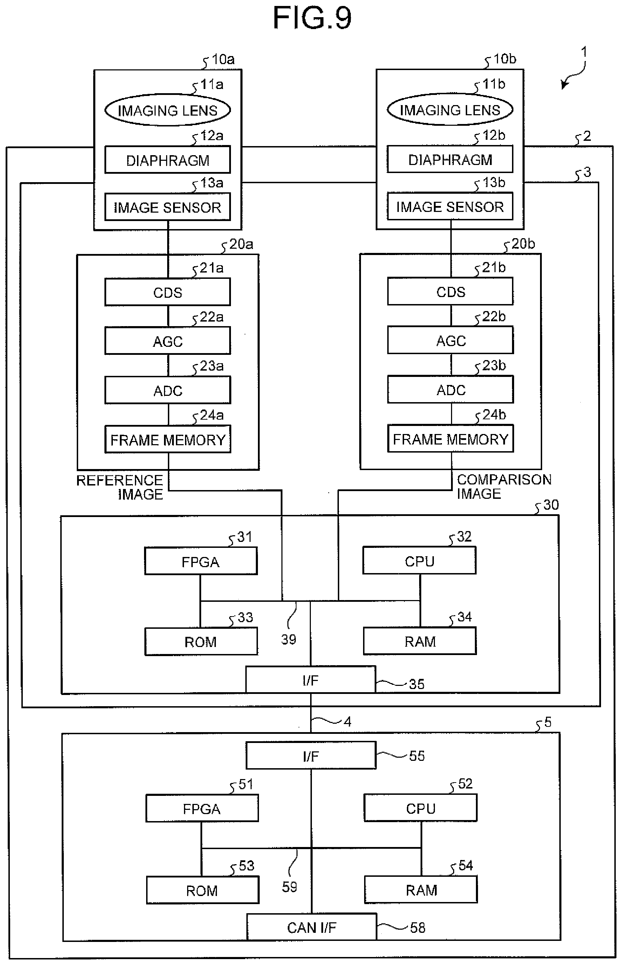

Referring now to FIG. 9, an overall hardware configuration of the object recognition system 1 will be described. FIG. 9 is a hardware configuration diagram of the object recognition system as a whole.

As illustrated in FIG. 9, the object recognition system 1 includes a disparity value deriving device 3 and an object recognition device 5 in the main body 2.

The disparity value deriving device 3 derives a disparity value $\Delta$ indicating disparity for an object E from a plurality of images obtained by imaging the object E and outputs a high density disparity image indicating the disparity value $\Delta$ in each pixel. The object recognition device 5 performs processing such as measuring the distance from the imaging devices 10a, 10b to the object E, based on the high density disparity image output from the disparity value deriving device 3.

Here, a hardware configuration of the disparity value deriving device 3 will be described first. As illustrated in FIG. 9, the disparity value deriving device 3 includes the imaging device 10a, the imaging device 10b, a signal conversion device 20a, a signal conversion device 20b, and an image processing device 30.

The imaging device 10a generates an analog signal representing an image by imaging the scene ahead and includes an imaging lens 11a, a diaphragm 12a, and an image sensor 13a.

The imaging lens 11a is an optical element for diffracting light passing through the imaging lens 11a to form an image of an object. The diaphragm 12a cuts off part of light passing through the imaging lens 11a to adjust the quantity of light input to the image sensor 13a described later. The image sensor 13a is a semiconductor device that converts light input from the imaging lens 11a and the diaphragm 12a into an electrical analog image signal and is implemented, for example, by a charge coupled device (CCD) or a complementary metal oxide semiconductor (CMOS). The imaging device 10b has the same configuration as the imaging device 10a, and a description of the imaging device 10b is omitted. The imaging lens 11a and the imaging lens 11b are installed such that their respective lens surfaces are on the same plane.

The signal conversion device 20a converts an analog signal representing the captured image into image data in digital format, and includes a correlated double sampling (CDS) 21a, an auto gain control (AGC) 22a, an analog digital converter (ADC) 23a, and a frame memory 24a.

The CDS 21a removes noise by correlated double sampling from the analog image signal converted by the image sensor 13a. The AGC 22a performs gain control of controlling the intensity of the analog image signal having noise removed by the CDS 21a. The ADC 23a converts the analog image signal gain-controlled by the AGC 22a into image data in digital format. The frame memory 24a stores the image data converted by the ADC 23a.

Similarly, the signal conversion device 20b obtains image data from the analog image signal converted by the imaging device 10b and includes a CDS 21b, an AGC 22b, an ADC 23b, and a frame memory 24b.

The CDS 21b, the AGC 22b, the ADC 23b, and the frame memory 24b have the same configuration as the CDS 21a, the AGC 22a, the ADC 23a, and the frame memory 24a, respectively, and a description thereof is omitted.

The image processing device 30 is a device for processing image data converted by the signal conversion device 20a and the signal conversion device 20b. The image processing device 30 includes a field programmable gate array (FPGA) 31, a central processing unit (CPU) 32, a read only memory (ROM) 33, a random access memory (RAM) 34, an interface (I/F) 35, and a bus line 39 such as an address bus and a data bus for electrically connecting the components 31 to 35 as illustrated in FIG. 9.

The FPGA 31 is an integrated circuit and performs the process of calculating a disparity value $\Delta$ in the image represented by image data in accordance with an instruction from the CPU 32. The CPU 32 controls each function in the disparity value deriving device 3. The ROM 33 stores an image processing program for the CPU 32 to execute to control each function in the disparity value deriving device 3. The RAM 34 is used as a work area for the CPU 32. The I/F 35 is an interface for communicating with the I/F 55 of the object recognition device 5 described later through the bus line 4 such as an address bus and a data bus.

A hardware configuration of the object recognition device 5 will now be described. As illustrated in FIG. 9, the object recognition device 5 includes an FPGA 51, a CPU 52, a ROM 53, a RAM 54, an I/F 55, a controller area network (CAN) I/F 58, and a bus line 59 such as an address bus and a data bus for electrically connecting the components 51 to 55, 58 as illustrated in FIG. 9.

The FPGA 51, the CPU 52, the ROM 53, the RAM 54, the I/F 55, and the bus line 59 have the same configuration as the FPGA 31, the CPU 32, the ROM 33, the RAM 34, the I/F 35, and the bus line 39, respectively, in the image processing device 30 and a description thereof is omitted. The I/F 55 is an interface for communicating with the I/F 35 in the image processing device 30 through the bus line 4. The ROM 53 stores an object recognition program for the CPU 52 to execute to control each function in the object recognition device 5. The CAN I/F 58 is an interface for communicating with, for example, an external controller and can be connected to, for example, a controller area network (CAN) of the automobile.

In such a configuration, when a high density disparity image is transmitted from the I/F 35 of the image processing device 30 to the object recognition device 5 through the bus line 4, the FPGA 51 calculates the distance Z from the imaging devices 10a, 10b to an object E according to an instruction from the CPU 52 in the object recognition device 5.

The FPGA 31 may calculate the distance Z under an instruction from the CPU 32 of the image processing device 30, rather than the FPGA 51 calculating the distance Z under an instruction from the CPU 52 in the object recognition device 5.

The programs described above may be recorded in an installable or executable file format on a computer-readable storage medium to be distributed. Examples of the storage medium include a compact disc read only memory (CD-ROM) and a secure digital (SD) memory card.

Calculation of Disparity Value in Region in Vicinity of Edge

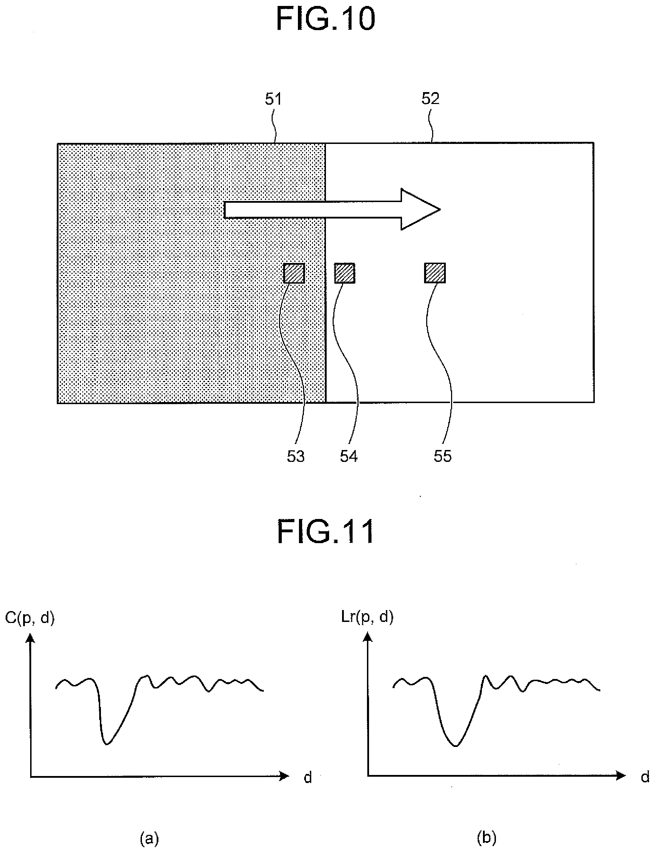

Calculation of a disparity value in a region in the vicinity of an edge will now be described with reference to FIG. 10 to FIG. 13. It is noted that the following description is based on Equation (3') below in place of Equation (3).

$$Lr(p,d) = C(p,d) + \min\{(Lr(p{-}r,d), Lr(p{-}r,d{-}1) + P1, Lr(p{-}r,d{+}1) + P1, Lr\min(p{-}r) + P2\} - Lr\min(p{-}r) \qquad (3')$$

This equation is derived by subtracting Lrmin(p-r) from the right side of Equation (3) and is superior to Equation (3) in implementation on hardware.

FIG. 10 is a diagram illustrating an example of pixels in the vicinity of a boundary between regions with widely different textures. A region 51 is a region with strong texture. A region 52 is a region with weak texture. A pixel 53, a pixel 54, and a pixel 55 are on the same horizontal line. The pixel 53 is located in the region 51, close to the boundary between the region 51 and the region 52. The pixel 54 is located in the region 52, close to the boundary between the region 51 and the region 52. The pixel 55 is located in the region 52, sufficiently away from the boundary between the region 51 and the region 52. The arrow in FIG. 10 indicates a case where the path cost Lr is calculated from the left to the right (the direction of $r_0$ in FIG. 5) in the horizontal direction.

FIG. 11 illustrates examples of the costs C(p,d) and the path costs Lr(p,d) for the pixel 53 in FIG. 10. The waveform of the costs C(p,d) has a large amplitude indicating a clear minimum point because the pixel 53 has strong texture. As a result of aggregation of the costs C in the region with strong texture, the path costs Lr(p,d) also exhibit a waveform similar to that of the costs C.

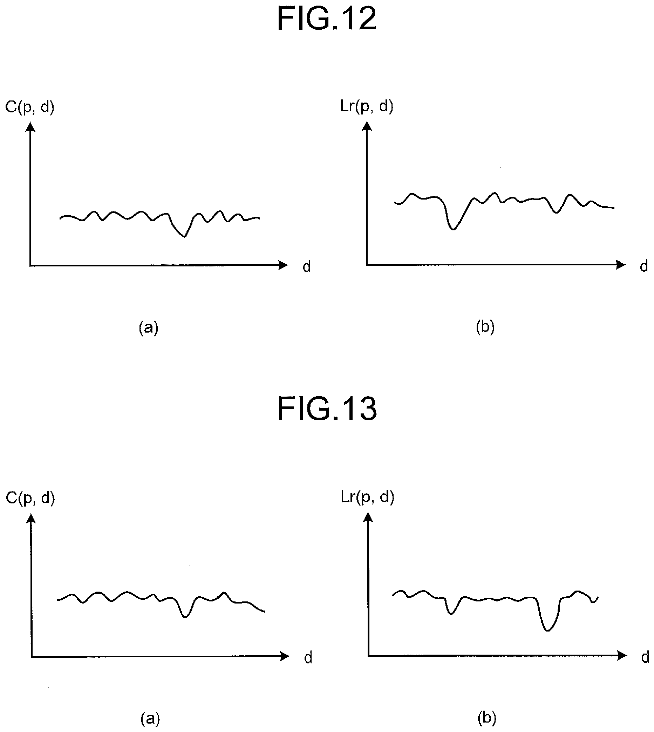

FIG. 12 illustrates examples of the costs C(p,d) and the path costs Lr(p,d) for the pixel 54 in FIG. 10. The costs C(p,d) merely exhibit an unclear minimum point because the pixel 54 has weak texture. The minimum point for the pixel 53 is mixed in the path costs Lr(p,d) for the pixel 54 due to aggregation of the costs C of the pixel 53. The path costs Lr(p,d) for the pixel 54 therefore have a minimum value smaller than the minimum value of the costs C of the pixel 54. The disparity value of the pixel 54 is thus erroneously determined as the disparity value of the pixel 53.

FIG. 13 illustrates examples of the costs C(p,d) and the path costs Lr(p,d) for the pixel 55 in FIG. 10. The costs C(p,d) for the pixel 55 exhibit the same waveform as the costs C(p,d) for the pixel 54. In the path costs Lr(p,d) for the pixel 54, however, the minimum point for the pixel 53 is cancelled during the process of aggregation, because the pixel 54 is sufficiently away from the boundary between the region 51 and the region 52. An accurate disparity value thus can be obtained in the pixel 55.

As described above with reference to FIG. 10 to FIG. 13, a disparity image appears as if a region with strong texture is expanded in the vicinity of a region with a large amount of change in luminance (in the vicinity of an edge), that is, the boundary between the region with strong texture and a region with weak texture.

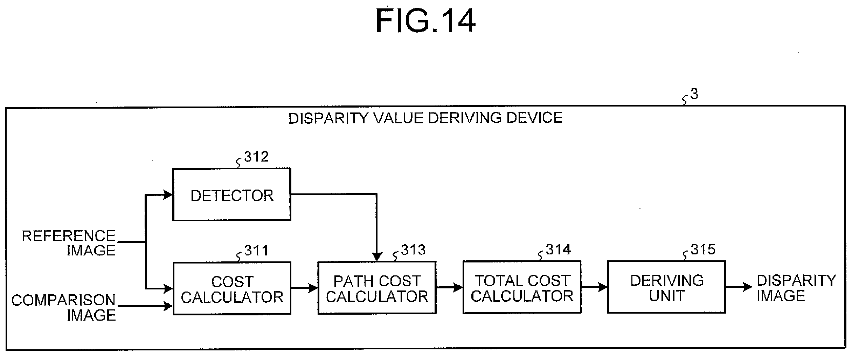

In order to acquire a disparity image with expansion of the region that has strong texture being suppressed, the FPGA 31 in FIG. 13 includes a cost calculator 311, a detector 312, a path cost calculator 313, a total cost calculator 314, and a deriving unit 315, as illustrated in FIG. 14. The present embodiment is characterized in that edge information detected by the detector 312 is used to correct the problem associated with strong and weak texture as described above. Although these units are part of the circuit of the FPGA 31, the same processing as performed by these units may be performed by execution of the above computer programs.

The cost calculator 311 receives a comparison image from the signal converter 20a and receives a reference image from the signal converter 20b. As illustrated in FIGS. 3A and 3B, for the reference pixel p(x,y) serving as a reference in the reference image, the cost calculator 311 calculates the cost C indicating the dissimilarity between the luminance value of the reference pixel p(x,y) and the luminance value of the comparison pixel q(x+d,y) to be compared in the comparison image, for each pixel (for example, q(x+d,y), 0 < d < 25) on the Epipolar line for the comparison pixel that corresponds to the Epipolar line for the reference pixel. The cost calculator 311 outputs the cost C to the path cost calculator 313.

The cost C can be calculated by any practical method. For example, the cost calculator 311 calculates the cost C from the absolute value of the difference between the luminance value of the reference pixel p(x,y) and the luminance value of the comparison pixel q(x+d,y).

The detector 312 detects an edge pixel indicating an edge in the reference image and acquires edge information e indicating the edge pixel in the reference image.

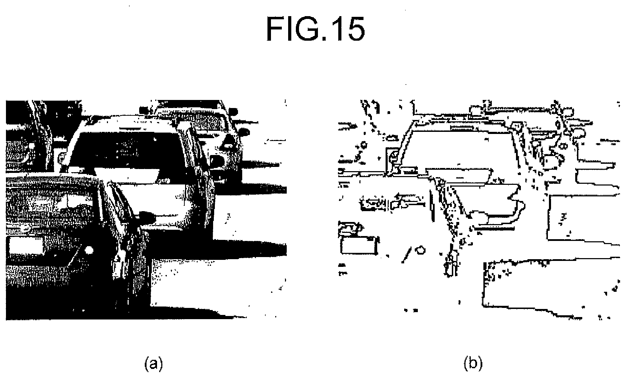

In FIG. 15, (a) illustrates an example of a reference image, and (b) illustrates an example of edge information e indicating edges in the reference image in (a). The detector 312 acquires edge information e as in (b) in FIG. 15, for example, by applying a Prewitt filter or a Sobel filter. It is noted that the edge information e in (b) in FIG. 15 is inverted such that portions with large values are black, for the purpose of improving visibility.

The edge information e may be either binary or multivalued, which may be selected appropriately in accordance with a specific calculation process in the path cost calculator 313. In the present embodiment, the edge information e is represented in binary. For example, e = 1 if the reference pixel p(x,y) has edge information equal to or greater than a predetermined value or exceeding a predetermined value, that is, it is an edge pixel, and e = 0 if the reference pixel p(x, y) has edge information not exceeding a predetermined value or equal to or smaller than a predetermined value, that is, it is not an edge pixel. The detector 312 outputs the edge information e to the path cost calculator 313.

The path cost calculator 313 receives the cost from the cost calculator 311 and receives the edge information e from the detector 312. The path cost calculator 313 calculates (aggregates) the path cost Lr for the reference pixel p(x,y) with respect to each path (for example, $r_0$, $r_{45}$, $r_{90}$, $r_{135}$, $r_{180}$, $r_{225}$, $r_{270}$, $r_{315}$) from a pixel in the neighborhood of the reference pixel p(x,y) to the reference pixel, based on the costs for the neighboring pixels and according to Equation (3), as illustrated in FIG. 5.

The path cost calculator 313 changes the calculation method of the path cost Lr if the reference pixel p(x,y) is an edge pixel. Specifically, the path cost calculator 313 in the embodiment changes the path cost Lr according to Equation (5) below, if the reference pixel p(x,y) is an edge pixel.

$$Lr(p,d) = C(p,d) + \min\{(Lr(p-r,d), Lr(p-r,d-1) + P1, Lr(p-r,d+1) + P1, Lrmin(p-r) +$$

$$P2\} - Lrmin(p-r) \ (e = 0),$$

and

$$Lr(p,d) = C(p,d) \ (e = 1) \tag{5}$$

More specifically, the path cost calculator 313 in the embodiment sets the path cost Lr to the cost C (p,d) for the reference pixel p(x,y), if the reference pixel p(x,y) is an edge pixel. Hence, aggregation with the cost C by Equation (5) is not performed, that is, synthesis is prohibited in the edge pixel, thereby preventing expansion or shrinkage of the result of distance measurement in the vicinity of an edge (a boundary portion between objects with widely different textures). The path cost calculator 313 outputs the path cost Lr to the total cost calculator 314.

The total cost calculator 314 receives the path costs Lr from the path cost calculator 313. The total cost calculator 314 calculates the total costs Ls serving as the synthesized costs for the reference pixel p(x,y), each as the sum of path costs Lr each per path, according to Equation (4). The total cost calculator 314 outputs the total cost Ls to the deriving unit 315.

The deriving unit 315 receives the total costs Ls from the total cost calculator 314. The deriving unit 315 derives a disparity value from the difference between the reference pixel p(x,y) and the pixel q(x+d,y) (0 < d < 25) in the comparison image that gives the smallest total cost Ls(p,d) for the reference pixel p(x,y). The deriving unit 315 outputs a disparity image indicating a disparity value of each pixel in the reference image, based on the total cost Ls(p,d) for each pixel in the reference image.

Processing in Embodiment

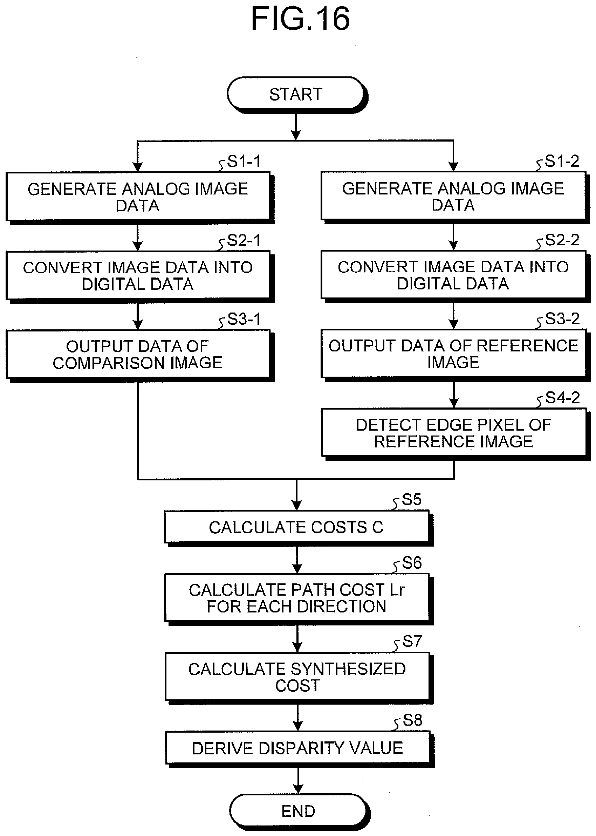

A method of calculating a disparity value in the embodiment will now be described. FIG. 16 is a flowchart illustrating a disparity value producing method in the embodiment.

First, the imaging device 10a illustrated in FIG. 9 captures an image of an object E and generates analog image data (step S1-1). Similarly, the imaging device 10b captures an image of the object and generates analog image data (step S1-2).

The signal converter 20a then converts the analog image data into digital image data (step S2-1). Similarly, the signal converter 20b converts the analog image data into digital image data (step S2-2).

The signal converter 20a then outputs the converted digital image data as data of a comparison image to the FPGA 31 of the image processor 30 (step S3-1). Similarly, the signal converter 20b outputs the converted digital image data as data of a reference image to the FPGA 31 of the image processor 30 (step S3-2).

The detector 312 of the FPGA 31 then detects an edge pixel indicating an edge in the reference image and acquires edge information e indicating the edge pixel in the reference image (step S4-2). The detector 312 outputs the edge information e to the path cost calculator 313.

Next, for the reference pixel p(x,y) serving as a reference in the reference image, the cost calculator 311 illustrated in FIG. 14 calculates the cost C indicating the dissimilarity between the luminance value of the reference pixel p(x,y) and the luminance value of the comparison pixel q(x+d,y) to be compared in the comparison image, for each pixel (for example, q(x+d,y), 0 < d < 25) on the Epipolar line for the comparison pixel that corresponds to the Epipolar line for the reference pixel (step S5).

The path cost calculator 313 calculates (aggregates) the path cost Lr for the reference pixel p(x,y) for each path (for example, $r_0$, $r_{45}$, $r_{90}$, $r_{135}$, $r_{180}$, $r_{225}$, $r_{270}$, $r_{315}$) from a pixel in the neighborhood of the reference pixel p(x,y) to the reference pixel, based on the costs for the neighboring pixels and according to Equation (3), as illustrated in FIG. 5 (step S6). In doing so, the path cost calculator 313 changes the calculation method of the path cost Lr according to Equation (5) above, if the reference pixel p(x,y) is an edge pixel.

Next, the total cost calculator 314 calculates the total costs Ls for the reference pixel p(x,y), each as the sum of path costs Lr each per path, according to Equation (4) (step S7).

The deriving unit 315 then derives a disparity value from the difference between the reference pixel p(x,y) and the pixel q(x+d,y) (0 < d < 25) in the comparison image that gives the smallest total cost Ls(p,d) for the reference pixel p(x,y) (step S8).

The disparity value deriving device 3 performs the processing in step S5 to step S8 in the flowchart as described above for each pixel in the reference image and then outputs a disparity image indicating a disparity value of each pixel in the reference image.

The disparity value deriving device 3 thereafter transmits the disparity image to the object recognition device 5 in FIG. 9 through the communication I/F 35 illustrated in FIG. 9. The object recognition device 5 calculates the distance Z from the imaging devices 10a, 10b to the object E.

Main Advantageous Effects of Embodiment

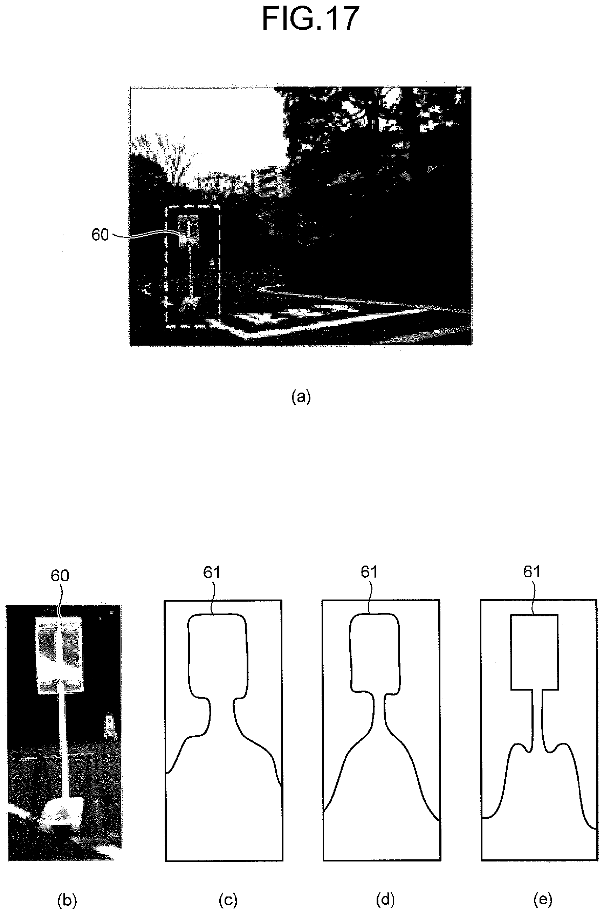

A disparity image obtained by the conventional SGM method is illustrated in (c) in FIG. 17, and disparity images obtained by the disparity value deriving device in the present embodiment are illustrated in (d) and (e) in FIG. 17. Those disparity images correspond to an example of the luminance image ((a) and (b) in FIG. 17). In FIG. 17, (d) illustrates a disparity image obtained when the predetermined value in the detector 312 is 100. In FIG. 17, (e) illustrates a disparity image obtained when the predetermined value in the detector 312 is 50. As illustrated in (a) to (e) in FIG. 17, a region 61 corresponding to a target object 60 (the portion indicated by the dotted line in (a) and (b) in FIG. 17) that is an example of the object recognized by the object recognition device 5 is smaller in the present embodiment than in the conventional SGM method. In particular, the smaller the predetermined value in the detector 312 is, the smaller the region 61 is.

As described above, in the disparity value deriving device 3 in the embodiment, the path cost calculator 313 sets the path cost Lr to the cost C(p,d) for the reference pixel p(x,y), if the reference pixel p(x,y) is an edge pixel. Hence, aggregation with the costs C by Equation (4) is not performed, that is, synthesis is prohibited in the edge pixel, thereby preventing expansion or shrinkage of the result of distance measurement in the vicinity of an edge (a boundary portion between objects with widely different textures).

Examples of a specific calculation process in the path cost calculator 313 will be described below as first to third modifications of the embodiment.

First Modification of Embodiment

The path cost calculator 313 in the present first modification calculates the path cost Lr according to Equation (6) below, if the reference pixel p(x,y) is an edge pixel.

$$Lr(p,d) = C(p,d) + \min\{(Lr(p-r,d), Lr(p-r,d-1) + P1, Lr(p-r,d+1) + P1, Lrmin(p-r) + P2\} - Lrmin(p-r) \ (e = 0),$$

and

$$Lr(p,d) = 0 \ (e = 1) \tag{6}$$

More specifically, in the present first modification, the path cost calculator 313 sets the path cost Lr(p,d) to zero if the reference pixel p(x,y) is an edge pixel. Hence, the minimum value of Lr(p,d) is eliminated because Lr(p,d) is always zero for any change of d. That is, the disparity for an edge pixel is invalid. The costs C for an edge pixel are not aggregated in the path costs Lr for pixels in the neighborhood of the edge pixel after the disparity for the edge pixel is set to zero once. Although disparity for an edge pixel cannot be detected, expansion or shrinkage of the result of distance measurement can be advantageously prevented more reliably.

Second Modification of Embodiment (not covered by the claims)

A second modification of the embodiment will now be described. The path cost calculator 313 in the present second modification calculates the path cost Lr according to Equation (7) below, if the reference pixel p(x,y) is an edge pixel.

$$Lr(p,d) = C(p,d) + \min\{(Lr(p-r,d), Lr(p-r,d-1) + P1, Lr(p-r,d+1) + P1, Lrmin(p-r) + P2\} - Lrmin(p-r) \ (e = 0),$$

and

$$Lr(p,d) = C(p,d) + \min\{(Lr(p-r,d), Lr(p-r,d-1) + P1, Lr(p-r,d+1) + P1, Lrmin(p-r) + P2'\} - Lrmin(p-r) \ (e = 1),$$

where

$$P2' = P2/2 \qquad\qquad (7)$$

More specifically, in the present second modification, the equation for the path cost calculator 313 to calculate the path cost Lr(p,d) is changed by setting the parameter P2' to P2/2 if the reference pixel p(x,y) is an edge pixel. With P2' set to a value smaller than P2, Lrmin(p-r)+P2' in the term min is more likely to be selected. The last term Lrmin(p-r) is subtracted from Lrmin(p-r)+P2', and, as a result, this equation functions such that the costs for the edge pixel are not aggregated in the path costs Lr for pixels in the neighborhood of the edge pixel. That is, synthesis is suppressed.

In the present second modification, the parameter P2 is corrected so that the costs for the edge pixel are not aggregated in the path costs Lr for a pixel in the neighborhood of the edge pixel, thereby reducing the effects on the edge portion. The present second modification can prevent expansion or shrinkage of the result of distance measurement without impairing the density of disparity (without increasing the number of pixels for which disparity cannot be determined). Correction of parameter P2 is not limited to P2' = P2/2 and any practical method can be used. For example, P2' = P2/3 or P2' = 0.

Third Modification of Embodiment (not covered by the claims)

A third modification of the embodiment will now be described. The present third modification is an example of the case where the edge information is not binary but multivalued. Specifically, the detector 312 detects the edge strength of an edge pixel and acquires edge information e indicating the edge strength in multiple values. For example, the detector 312 represents edge information e by a numerical value of 0 to 7. That is, an edge pixel is represented by a value of 1 to 7. The larger the value is, the stronger the edge is. The path cost calculator 313 in the present third modification calculates the path cost Lr according to Equation (8) below, if the reference pixel p(x,y) is an edge pixel.

$$Lr(p,d) = C(p,d) + \min\{(Lr(p-r,d), Lr(p-r,d-1) + P1, Lr(p-r,d+1) + P1, Lrmin(p-r) + P2\} - Lrmin(p-r) \ (e = 0),$$

and

$$Lr(p,d) = C(p,d) + \min\{(Lr(p-r,d), Lr(p-r,d-1) + P1, Lr(p-r,d+1) + P1, Lrmin(p-r) + P2'\} - Lrmin(p-r) \ (e = 1),$$

where

$$P2' = P2/e \qquad\qquad (8)$$

In the present third modification, the equation for the path cost calculator 313 to calculate the path cost Lr(p, d) is changed by setting the parameter P2' to P2/e if the reference pixel p(x,y) is an edge pixel. With P2' set to a smaller value in accordance with the edge strength, Lrmin(p-r)+P2' in the term min is more likely to be selected as the edge strength increases. The last term Lrmin(p-r) is subtracted from Lrmin(p-r)+P2', and, as a result, this equation functions to more suppress aggregation of the costs for the edge pixel in the path costs Lr for pixels in the neighborhood of the edge pixel as the edge strength increases. That is, synthesis is suppressed.

The effects on the edge portion are reduced more with the present third modification than with the second modification, because, in general, a strong edge tends to appear in an object with varying distances. The present third modification can prevent expansion or shrinkage of the result of distance measurement without impairing the density of disparity (without increasing the number of pixels for which disparity cannot be determined).

Fourth Modification of Embodiment

A fourth modification of the embodiment will now be described. In the embodiment described above, the path cost calculator 313 receives the costs C from the cost calculator 311 and receives the edge information e from the detector 312 to calculate the path costs Lr. In the present fourth modification, the path cost calculator 313 calculates the path costs Lr by referring to pixel information that is a set of edge information e and the costs C for a pixel in a reference image. The difference between the present fourth embodiment and the foregoing embodiment will be described.

The detector 312 outputs edge information e to the cost calculator 311. The cost calculator 311 generates pixel information that is a set of the edge information e received from the detector 312 and the costs C for a pixel in the reference image, for each pixel in the reference image. The cost calculator 311 outputs the pixel information to the path cost calculator 313.

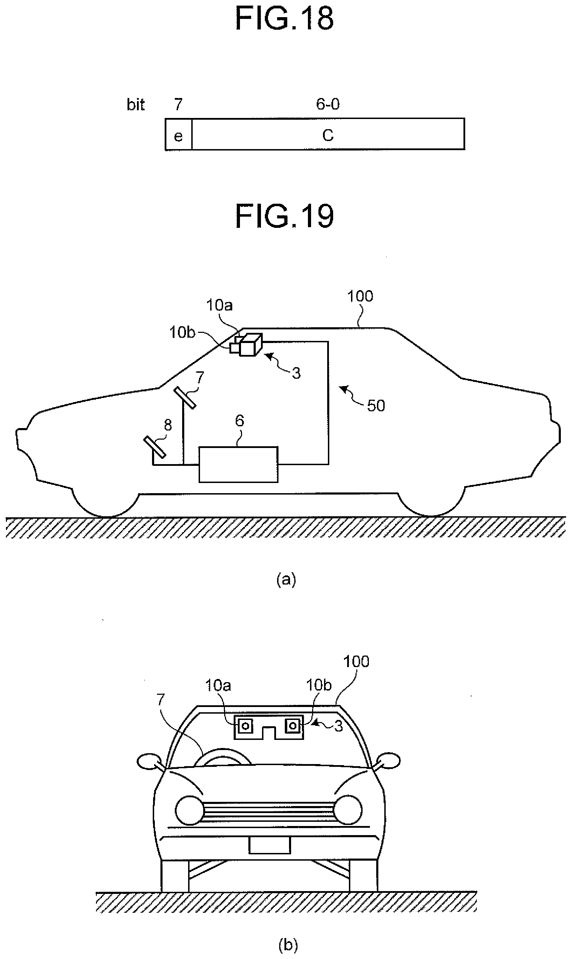

FIG. 18 is a diagram illustrating an example of the pixel information in the fourth modification of the embodiment. FIG. 18 illustrates an example of the pixel information in which the edge information e is a one-bit value (0 or 1) and the cost C is a seven-bit value (0 to 127). Although the edge information e is set in the most significant bit (bit 7) in the example in FIG. 18, the edge information e may be stored in any position. The cost C is calculated for each shift amount d. Hence, the cost calculator 311 generates a plurality of pixel information for a single pixel (x,y) by adding the edge information e at the corresponding coordinates to each of the costs for the same pixel (x,y) with different shift amounts d.

The path cost calculator 313 receives the pixel information from the cost calculator 311. The path cost calculator 313 performs computation per shift amount d and therefore can make efficient memory access because of the data structure of the pixel information in FIG. 18, thereby increasing the processing speed. In particular, in a case where computation per shift amount d is performed in parallel in a plurality of cores, the path cost Lr can be advantageously calculated by referring to the edge information e of the pixel information of a process target without providing the edge information e to the cores.

In a case where the path cost calculator 313 performs sequential computation per coordinate point, the edge information e may be added in the leading one bit, and the cost C per shift amount d may be successively arranged in the following bits.

Supplemental Notes on Embodiments

An equipment control system including the disparity value deriving device in the foregoing embodiment will be described.

In FIG. 19, (a) is a schematic illustrating a side view of an automobile equipped with the disparity value deriving device in an embodiment of the present invention, and (b) is a schematic illustrating the front view of the automobile.

As illustrated in FIG. 19, the disparity value deriving device 3 in the present embodiment includes the imaging device 10a and the imaging device 10b. The imaging device 10a and the imaging device 10b are installed so as to be able to capture an image of the scene ahead in the direction in which the automobile travels.

A vehicle 100 equipped with an equipment control system 50 in the present embodiment will be described with reference to FIG. 19. In FIG. 19, (a) is a side view of the vehicle 100 equipped with the equipment control system 50, and (b) is a front view of the vehicle 100.

As illustrated in FIGS. 19, the vehicle 100 configured as an automobile includes the equipment control system 50. The equipment control system 50 includes the disparity value deriving device 3 installed in the inside of the vehicle that is a cabin space, a control device 6, a steering wheel 7, and a brake pedal 8.

The disparity value deriving device 3 has an imaging function of imaging the direction in which the vehicle 100 travels, and is installed, for example, in the vicinity of the rear view mirror on the inside of the front window of the vehicle 100. The disparity value deriving device 3, the details of which will be described later, includes a main body 2, and the imaging device 10a and the imaging device 10b fixed to the main body 2. The imaging devices 10a, 10b are fixed to the main body 2 such that an object in the direction in which the vehicle 100 travels can be imaged.

The control device 6 executes a variety of vehicle control with distance information from the disparity value deriving device 3 to the object that is obtained based on image data of the disparity image received from the disparity value deriving device 3. The control device 6 executes, as an example of the vehicle control, steering control of controlling a steering system (control target) including the steering wheel 7 to avoid an obstacle, or brake control of controlling the brake pedal 8 (control target) to decelerate and stop the vehicle 100, based on image data of the disparity image received from the disparity value deriving device 3.

The safety of driving the vehicle 100 can be improved by executing vehicle control such as steering control or brake control as in the equipment control system 50 including the disparity value deriving device 3 and the control device 6.

As described above, the disparity value deriving device 3 captures an image of objects in front of the vehicle 100. However, embodiments are not limited thereto. Specifically, the disparity value deriving device 3 may be installed so as to capture an image of objects in the rear or at the side of the vehicle 100. In this case, the disparity value deriving device 3 can detect the position of, for example, a vehicle behind that follows the vehicle 100 or other vehicles running side by side with the vehicle 100. The control device 6 can detect the danger when the vehicle 100 changes lanes or merges into a lane, and execute the above vehicle control. The control device 6 can also execute the above vehicle control when determining that there is a danger of collision while the vehicle 100 is being backed, for example, in a parking space, based on the disparity image of an obstacle behind the vehicle 100 that is detected by the disparity value deriving device 3.

According to the embodiments described above, is it is possible to provide accurate measurement of the distance of a boundary portion between objects having widely different textures while suppressing the load of distance measurement processing and the memory usage of distance measurement processing.

**Claims**

1.  A disparity value deriving device (3) comprising:

    a cost calculator (311) configured to calculate, for a reference pixel serving as a reference in a reference image including an image of an object captured by a first imaging unit, a cost indicating dissimilarity between a luminance value of the reference pixel and a luminance value of a comparison pixel to be compared in a comparison image including an image of the object captured by a second imaging unit, for each pixel on an Epipolar line for the comparison pixel that corresponds to an Epipolar line (El) for the reference pixel;
    a detector (312) configured to detect an edge pixel indicating an edge in the reference image;
    a path cost calculator (313) configured to calculate a path cost for the reference pixel for each path from a pixel neighboring the reference pixel to the reference pixel, using the cost for the reference pixel calculated by the cost calculator (311) and the path costs for the neighboring pixels;
    a synthesized cost calculator (314) configured to calculate a synthesized cost for the reference pixel by summing up all the path costs for the reference pixel; and
    a deriving unit (315) configured to derive a disparity value for the object from a difference in position between the reference pixel in the reference image and a pixel in the comparison image, the pixel corresponding to the smallest synthesized cost for the reference pixel,
    **characterized in that**
    when the reference pixel is an edge pixel, the path cost calculator (313) is configured to change the method of calculating the path cost for the reference pixel, wherein
    the path cost calculator (313) is configured to set the path cost to the cost for the reference pixel when the reference pixel is an edge pixel.

2.  The disparity value deriving device according to claim 1, wherein the path cost calculator (313) sets the path cost to zero when the reference pixel is the edge pixel.

3.  The disparity value deriving device according to claim 1, wherein the cost (314) calculator receives, from the detector (312), edge information indicating whether a pixel in the reference image is an edge pixel, and outputs pixel information that is a set of the edge information and the cost for the pixel in the reference image, for each pixel in the reference image.

4.  The disparity value deriving device according to any one of claims 1 to 3, wherein one reference pixel is selected from a unit of a predetermine region including a plurality of pixels, and the disparity value is derived in a unit of the predetermined region.

5.  An equipment control system comprising:

    the disparity value deriving device of any one of the preceding claims; and
    a control device configured to control a control target with distance information from the disparity value deriving device to the object, the distance information being obtained from the disparity value derived by the disparity value deriving device.

6.  A movable apparatus comprising the disparity value deriving device of any one of the preceding claims.

7.  The movable apparatus according to claim 6, wherein the movable apparatus is a vehicle or a robot.

**8.** A robot comprising the disparity value deriving device of any one of the preceding claims.

**9.** A disparity value producing method comprising:

calculating, for a reference pixel serving as a reference in a reference image including an image of an object captured by a first imaging unit, a cost indicating dissimilarity between a luminance value of the reference pixel and a luminance value of a comparison pixel to be compared in a comparison image including an image of the object captured by a second imaging unit, for each pixel on an Epipolar line (EI) for the comparison pixel that corresponds to an Epipolar line for the reference pixel;

detecting an edge pixel indicating an edge in the reference image;

calculating a path cost for the reference pixel for each path from a pixel neighboring the reference pixel to the reference pixel, using the calculated cost for the reference pixel and the path costs for the neighboring pixels;

calculating a synthesized cost for the reference pixel by summing up all the path costs for the reference pixel; and

deriving a disparity value for the object from a difference in position between the reference pixel in the reference image and a pixel in the comparison image, the pixel corresponding to a smallest synthesized cost for the reference pixel,

**characterized in that**

when the reference pixel is an edge pixel, the method of calculating the path cost for the reference pixel is changed, wherein

the path cost is set to the cost for the reference pixel when the reference pixel is an edge pixel.

**Patentansprüche**

**1.** Disparitätswertableitungsvorrichtung (3), die umfasst:

einen Kostenrechner (311), der dazu konfiguriert ist, für ein Referenzpixel, das als Referenz in einem Referenzbild dient, das ein Bild eines Objekts enthält, das von einer ersten Abbildungseinheit erfasst wird, Kosten zu berechnen, die eine Unähnlichkeit zwischen einem Luminanzwert des Referenzpixels und einem Luminanzwert eines zu vergleichenden Vergleichspixels in einem Vergleichsbild angeben, das ein Bild des Objekts enthält, das von einer zweiten Abbildungseinheit erfasst wird, für jedes Pixel auf einer Epipolarlinie für das Vergleichspixel, die einer Epipolarlinie (E1) für das Referenzpixel entspricht;

einen Detektor (312), der konfiguriert ist, um ein Kantenpixel zu detektieren, das eine Kante in dem Referenzbild anzeigt;

einen Pfadkostenrechner (313), der dazu konfiguriert ist, Pfadkosten für das Referenzpixel für jeden Pfad von einem Pixel, das dem Referenzpixel benachbart ist, zu dem Referenzpixel zu berechnen, unter Verwendung der Kosten für das Referenzpixel, die durch den Kostenrechner (311) berechnet wurden, und der Pfadkosten für die Nachbarpixel;

einen Rechner für synthetisierte Kosten (314), der so konfiguriert ist, dass er synthetisierte Kosten für das Referenzpixel berechnet, indem er alle Pfadkosten für das Referenzpixel summiert; und

eine Ableitungseinheit (315), die dazu konfiguriert ist, einen Disparitätswert für das Objekt aus einer Positionsdifferenz zwischen dem Referenzpixel im Referenzbild und einem Pixel im Vergleichsbild abzuleiten, wobei das Pixel den kleinsten synthetisierten Kosten für das Referenzpixel entspricht,

**dadurch gekennzeichnet, dass**

wenn das Referenzpixel ein Kantenpixel ist, der Pfadkostenrechner (313) dazu konfiguriert ist, das Verfahren zum Berechnen der Pfadkosten für das Referenzpixel zu ändern, wobei

der Pfadkostenrechner (313) so konfiguriert ist, dass er die Pfadkosten auf die Kosten für das Referenzpixel setzt, wenn das Referenzpixel ein Kantenpixel ist.

**2.** Disparitätswertableitungsvorrichtung nach Anspruch 1, wobei der Pfadkostenrechner (313) die Pfadkosten auf Null setzt, wenn das Referenzpixel das Kantenpixel ist.

**3.** Disparitätswertableitungsvorrichtung nach Anspruch 1, wobei der Kostenrechner (314) von dem Detektor (312) Kanteninformationen empfängt, die angeben, ob ein Pixel in dem Referenzbild ein Kantenpixel ist, und Pixelinformationen ausgibt, die ein Satz der Kanteninformationen und der Kosten für das Pixel im Referenzbild für jedes Pixel im Referenzbild sind.

**4.** Disparitätswertableitungsvorrichtung nach einem der Ansprüche 1 bis 3, wobei ein Referenzpixel aus einer Einheit eines vorbestimmten Bereichs ausgewählt wird, der eine Vielzahl von Pixeln enthält, und der Disparitätswert in einer Einheit des vorbestimmten Bereichs abgeleitet wird.

5. Ausrüstungssteuersystem, das umfasst:

die Disparitätswertableitungsvorrichtung nach einem der vorhergehenden Ansprüche; und
eine Steuervorrichtung, die dazu konfiguriert ist, ein Steuerziel mit Entfernungsinformationen von der Disparitätswertableitungsvorrichtung zu dem Objekt zu steuern, wobei die Entfernungsinformationen aus dem Disparitätswert erhalten werden, der von der Disparitätswertableitungsvorrichtung abgeleitet wird.

6. Bewegliche Vorrichtung, welche die Disparitätswertableitungsvorrichtung nach einem der vorhergehenden Ansprüche umfasst.

7. Bewegliche Vorrichtung nach Anspruch 6, wobei die bewegliche Vorrichtung ein Fahrzeug oder ein Roboter ist.

8. Roboter, der die Disparitätswertableitungsvorrichtung nach einem der vorhergehenden Ansprüche umfasst.

9. Disparitätswerterzeugungsverfahren, das umfasst:

Berechnen, für ein Referenzpixel, das als Referenz in einem Referenzbild dient, das ein Bild eines Objekts enthält, das von einer ersten Bildgebungseinheit erfasst wird, von Kosten, die eine Unähnlichkeit zwischen einem Luminanzwert des Referenzpixels und einem Luminanzwert eines zu vergleichenden Vergleichspixels in einem Vergleichsbild angeben, das ein Bild des Objekts enthält, das von einer zweiten Abbildungseinheit erfasst wird, für jedes Pixel auf einer Epipolarlinie (E1) für das Vergleichspixel, die einer Epipolarlinie für das Referenzpixel entspricht;
Erfassen eines Kantenpixels, das eine Kante in dem Referenzbild anzeigt;
Berechnen von Pfadkosten für das Referenzpixel für jeden Pfad von einem dem Referenzpixel benachbarten Pixel zu dem Referenzpixel unter Verwendung der berechneten Kosten für das Referenzpixel und der Pfadkosten für die benachbarten Pixel;
Berechnen synthetisierter Kosten für das Referenzpixel durch Aufsummieren aller Pfadkosten für das Referenzpixel; und
Ableiten eines Disparitätswerts für das Objekt aus einer Positionsdifferenz zwischen dem Referenzpixel im Referenzbild und einem Pixel im Vergleichsbild, wobei das Pixel den kleinsten synthetisierten Kosten für das Referenzpixel entspricht,
**dadurch gekennzeichnet, dass**
wenn das Referenzpixel ein Kantenpixel ist, das Verfahren zum Berechnen der Pfadkosten für das Referenzpixel geändert wird, wobei
die Pfadkosten auf die Kosten für das Referenzpixel gesetzt werden, wenn das Referenzpixel ein Kantenpixel ist.

**Revendications**

1. Dispositif de déduction de valeur de disparité (3), comprenant :

un calculateur de coût (311) configuré pour calculer, pour un pixel de référence servant de référence dans une image de référence, incluant une image d'un objet, capturée par une première unité d'imagerie, un coût indiquant une dissimilarité entre une valeur de luminance du pixel de référence et une valeur de luminance d'un pixel de comparaison destiné à être comparé dans une image de comparaison, incluant une image de l'objet, capturée par une seconde unité d'imagerie, pour chaque pixel sur une ligne épipolaire pour le pixel de comparaison qui correspond à une ligne épipolaire (El) pour le pixel de référence ;
un détecteur (312) configuré pour détecter un pixel de bord indiquant un bord dans l'image de référence ;
un calculateur de coût de trajet (313) configuré pour calculer un coût de trajet pour le pixel de référence, pour chaque trajet depuis un pixel avoisinant le pixel de référence jusqu'au pixel de référence, en utilisant le coût pour le pixel de référence calculé par le calculateur de coût (311) et les coûts de trajet pour les pixels avoisinants ;
un calculateur de coût synthétisé (314) configuré pour calculer un coût synthétisé pour le pixel de référence en faisant la somme de tous les coûts de trajet pour le pixel de référence ; et
une unité de déduction (315) configurée pour déduire une valeur de disparité pour l'objet à partir d'une différence de position entre le pixel de référence dans l'image de référence et un pixel dans l'image de comparaison, le pixel correspondant au plus petit coût synthétisé pour le pixel de référence,
**caractérisé en ce que**
lorsque le pixel de référence est un pixel de bord, le calculateur de coût de trajet (313) est configuré pour changer le procédé de calcul du coût de trajet pour le pixel de référence, dans lequel
le calculateur de coût de trajet (313) est configuré pour régler le coût de trajet au coût pour le pixel de référence lorsque le pixel de référence est un pixel de bord.

2. Dispositif de déduction de valeur de disparité selon la revendication 1, dans lequel le calculateur de coût de trajet (313) règle le coût de trajet à zéro lorsque le pixel de référence est le pixel de bord.

3. Dispositif de déduction de valeur de disparité selon la revendication 1, dans lequel le calculateur de coût (314) reçoit, à partir du détecteur (312), des informations de bord indiquant si un pixel dans l'image de référence est un pixel de bord, et sort des informations de pixel qui sont un ensemble des informations de bord et du coût pour le pixel dans l'image de référence, pour chaque pixel dans l'image de référence.

4. Dispositif de déduction de valeur de disparité selon l'une quelconque des revendications 1 à 3, dans lequel un pixel de référence est sélectionné à partir d'une unité d'une région prédéterminée incluant une pluralité de pixels, et la valeur de disparité est déduite dans une unité de la région prédéterminée.

5. Système de commande d'équipement, comprenant :

le dispositif de déduction de valeur de disparité de l'une quelconque des revendications précédentes ; et
un dispositif de commande configuré pour commander une cible de commande avec des informations de distance depuis le dispositif de déduction de valeur de disparité jusqu'à l'objet, les informations de distance étant obtenues à partir de la valeur de disparité déduite par le dispositif de déduction de valeur de disparité.

6. Appareil mobile, comprenant le dispositif de déduction de valeur de disparité de l'une quelconque des revendications précédentes.

7. Appareil mobile selon la revendication 6, dans lequel l'appareil mobile est un véhicule ou un robot.

8. Robot, comprenant le dispositif de déduction de valeur de disparité de l'une quelconque des revendications précédentes.

9. Procédé de production de valeur de disparité, comprenant :

le calcul, pour un pixel de référence servant de référence dans une image de référence, incluant une image d'un objet, capturée par une première unité d'imagerie, d'un coût indiquant une dissimilarité entre une valeur de luminance du pixel de référence et une valeur de luminance d'un pixel de comparaison destiné à être comparé dans une image de comparaison, incluant une image de l'objet, capturée par une seconde unité d'imagerie, pour chaque pixel sur une ligne épipolaire (EI) pour le pixel de comparaison qui correspond à une ligne épipolaire pour le pixel de référence ;
la détection d'un pixel de bord indiquant un bord dans l'image de référence ;
le calcul d'un coût de trajet pour le pixel de référence pour chaque trajet depuis un pixel avoisinant le pixel de référence jusqu'au pixel de référence, en utilisant le coût calculé pour le pixel de référence et les coûts de trajet pour les pixels avoisinants ;
le calcul d'un coût synthétisé pour le pixel de référence en faisant la somme de tous les coûts de trajet pour le pixel de référence ; et
la déduction d'une valeur de disparité pour l'objet à partir d'une différence de position entre le pixel de référence dans l'image de référence et un pixel dans l'image de comparaison, le pixel correspondant à un plus petit coût synthétisé pour le pixel de référence,
**caractérisé en ce que**
lorsque le pixel de référence est un pixel de bord, le procédé du calcul du coût de trajet pour le pixel de référence est changé, dans lequel
le coût de trajet est réglé au coût pour le pixel de référence lorsque le pixel de référence est un pixel de bord.

# FIG.1

# FIG.2

(a)

(b)

(c)

# FIG.3

(a)

(b)

EPIPOLAR LINE
EL

p(x, y)

q(x+d, y)

d

# FIG.4

# FIG.5

# FIG.6

# FIG.7

(a)

(b)

# FIG.8

# FIG.9

# FIG.10

51          52

53  54      55

# FIG.11

C(p, d)                    Lr(p, d)

d                          d

(a)                        (b)

# FIG.12

C(p, d)

d

(a)

Lr(p, d)

d

(b)

# FIG.13

C(p, d)

d

(a)

Lr(p, d)

d

(b)

# FIG.14

EP 2 919 191 B1

DISPARITY VALUE DERIVING DEVICE — 3

DETECTOR — 312

REFERENCE IMAGE

COMPARISON IMAGE

COST CALCULATOR — 311

PATH COST CALCULATOR — 313

TOTAL COST CALCULATOR — 314

DERIVING UNIT — 315

DISPARITY IMAGE

# FIG.15

(a)

(b)

# FIG.16

```
                          START

      ┌──────────────────────┴──────────────────────┐
      ↓ ⌐S1-1                                        ↓ ⌐S1-2
┌──────────────────────┐              ┌──────────────────────┐
│ GENERATE ANALOG IMAGE│              │ GENERATE ANALOG IMAGE│
│        DATA          │              │        DATA          │
└──────────────────────┘              └──────────────────────┘
      ↓ ⌐S2-1                                        ↓ ⌐S2-2
┌──────────────────────┐              ┌──────────────────────┐
│ CONVERT IMAGE DATA   │              │ CONVERT IMAGE DATA   │
│   INTO DIGITAL DATA  │              │   INTO DIGITAL DATA  │
└──────────────────────┘              └──────────────────────┘
      ↓ ⌐S3-1                                        ↓ ⌐S3-2
┌──────────────────────┐              ┌──────────────────────┐
│  OUTPUT DATA OF       │              │ OUTPUT DATA OF       │
│ COMPARISON IMAGE      │              │ REFERENCE IMAGE      │
└──────────────────────┘              └──────────────────────┘
                                                     ↓ ⌐S4-2
                                      ┌──────────────────────┐
                                      │ DETECT EDGE PIXEL OF │
                                      │   REFERENCE IMAGE    │
                                      └──────────────────────┘
      └──────────────────────┬──────────────────────┘
                             ↓ ⌐S5
                  ┌──────────────────────┐
                  │   CALCULATE COSTS C  │
                  └──────────────────────┘
                             ↓ ⌐S6
                  ┌──────────────────────┐
                  │ CALCULATE PATH COST  │
                  │ Lr FOR EACH DIRECTION│
                  └──────────────────────┘
                             ↓ ⌐S7
                  ┌──────────────────────┐
                  │ CALCULATE SYNTHESIZED│
                  │        COST          │
                  └──────────────────────┘
                             ↓ ⌐S8
                  ┌──────────────────────┐
                  │ DERIVE DISPARITY VALUE│
                  └──────────────────────┘
                             ↓
                           END
```

# FIG.17

(a)

(b)

(c)

(d)

(e)

# FIG.18

| bit | 7 | 6-0 |
|-----|---|-----|
|     | e | C   |

# FIG.19

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006090896 A

- JP 2012181142 A

**Non-patent literature cited in the description**

- **HEIKO HIRSCHMULLER.** Accurate and Efficient Stereo Processing by Semi-Global Matching and Mutual Information. *IEEE Conference on Computer Vision and Pattern Recognition,* 2005

- **CHRISTIAN N SCHARFENBERGER.** *Panoramic Vision for Automotive Applications: From Image Rectification to Ambiance Monitoring and Driver Body Height Estimation,* 03 February 2011